# EUROPÄISCHE PATENTSCHRIFT

(11) **EP 0 914 563 B1**
(45) Veröffentlichungstag und Bekanntmachung des Hinweises auf die Patenterteilung: **23.05.2001**
(21) Anmeldenummer: 97951192.0
(22) Anmeldetag: 13.11.1997
(51) Int. Cl.: F15C 5/00, F15C 3/04, F16K 31/00, H01L 41/09

(54) **PIEZOELEKTRISCH BETÄTIGTES MIKROVENTIL**
PIEZO-ELECTRIC OPERATED MICROVALVE
MICRO SOUPAPE A ACTIONNEMENT PIEZO-ELECTRIQUE

(30) Priorität: 25.11.1996 DE 19648730; 13.08.1997 DE 19735156
(43) Veröffentlichungstag der Anmeldung: 12.05.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: KLUGE, Stefan, D-80992 München (DE); WOIAS, Peter, D-81735 München (DE)
(74) Vertreter: Schoppe, Fritz, Dipl.-Ing.
(86) Internationale Anmeldenummer: EP9706344
(87) Internationale Veröffentlichungsnummer: WO9823868

(56) Entgegenhaltungen:
- EP-A- 0 170 173
- EP-A- 0 704 916
- FR-A- 2 642 812
- US-A- 5 340 081
- ROSSBERG, R., SCHMIDT, B., BÜTTGENBACH, S.: "Micro Liquid Dosing System" MICROSYSTEM TECHNOLOGIES, Bd. 2, Dezember 1995, DE, Seiten 11-16, XP002059881 in der Anmeldung erwähnt
- PATENT ABSTRACTS OF JAPAN vol. 095, no. 009, 31.Oktober 1995 & JP 07 158757 A (NIPPONDENSO CO LTD), 20.Juni 1995, in der Anmeldung erwähnt
- DOGAN, A., ET AL: "Properties of Piezoelectric Actuators" PROC. 5TH INTERNATIONAL CONFERENCE ON NEW ACTUATORS, 26. - 28.Juni 1996, DE-BREMEN, Seite 233ff XP002059882 in der Anmeldung erwähnt
- FERNANDEZ, J.F., ET AL: "Tailoring Performance of Cymbal Actuators" PROC. 5TH INTERNATIONAL CONFERENCE ON NEW ACTUATORS, 26. - 28.Juni 1996, DE-BREMEN, Seite 261ff XP002059883 in der Anmeldung erwähnt

## Beschreibung

Die vorliegende Erfindung bezieht sich auf mikromechanisch gefertigte Ventile und insbesondere piezoelektrisch betriebene Mikroventile.

Mikroventile können allgemein in der Pneumatik und Fluidik bei der Steuerung von Gas- und Flüssigkeits-Strömungen, also Fluidströmungen, verwendet werden. Ein solches Ventil kann dabei entweder die Funktion eines Vorsteuerventils besitzen oder direkt der Steuerung eines Volumenstromes bzw. Drucks in einem Arbeitskolben und dergleichen dienen.

Derzeit bekannte piezoelektrisch betriebene Mikroventile, die auf dem inversen piezoelektrischen Effekt beruhen, weisen eine große, meist einseitig eingespannte Piezokeramik auf, mit der der Fluidstrom direkt geregelt wird. Ein derartiges piezoelektrisch betriebenes Silizium-Mikroventil ist in R. Roßberg, B. Schmidt, S. Büttgenbach: "Micro Liquid Dosing System", Microsystem Technologies 2 (1995), Seiten 11 bis 16, Springer-Verlag 1995, beschrieben. Bei solchen Mikroventilen kann die Piezokeramik entweder selbst als Ventilstößel dienen oder es wird ein direkt von der Piezokeramik geführter Ventilstößel eingesetzt.

Die in der obigen Schrift beschriebenen Mikroventile weisen einen Nachteil dahingehend auf, daß für die für einen großen Durchfluß benötigte Auslenkung des Ventilstößels, der auch als Ventilklappe bezeichnet werden kann, über dem Ventilsitz eine sehr lange Piezokeramik benötigt wird. Zur Aufnahme einer solchen Piezokeramik ist selbstverständlich auch ein entsprechend großes Gehäuse erforderlich. Die bekannten piezobetriebenen Mikroventile, wie sie beispielsweise in der oben genannten Schrift beschrieben sind, weisen also im Vergleich zu Ihrer Baugröße eine relativ kleine Ventilöffnung, d.h. Nennweite, auf.

Aus A. Dogan, J.F. Fernandez, J.F. Tressler, K. Uchino, R.E. Newnham: "Properties of piezoelectric actuators"; Proceedings 5th International Conference on New Actuators 1996; Bremen 26.-28. Juni 1996, und J.F. Fernandez, A. Dogan, J.F. Tressler, K.Uchino, R.E. Newnham: "Tailoring performance of cymbal actuators", Proceedings 5th International Conference on New Actuators, Bremen 26.-28. Juni 1996, sind piezoelektrische Betätigungsglieder bekannt, die aus einem piezoelektrischen Keramikmaterial als einem Antriebselement bestehen, das zwischen zwei Endabdeckungen, die an ihren Rändern mit dem Keramikmaterial verbunden sind, angeordnet ist. Durch diese Anordnung wird eine laterale Bewegung der piezoelektrischen Keramik in eine große axiale Verschiebung senkrecht zu den Endabdeckungen umgewandelt und verstärkt. Wie in der Schrift "Tailoring performance of cymbal actuators" beschrieben ist, werden als Endabdeckungen Metalle bzw. Metallegierungen verwendet, beispielsweise Zirkon, Messing, kohlenstoffarmer Stahl, Molybdän oder Wolfram.

Das Abstract der JP-A-07158757 offenbart ein Mikroventil mit einem Grundkörper, der eine Durchlaßöffnung aufweist, die mittels einer Verdickung einer Siliziummembran verschließbar ist. Auf der Siliziummembran ist ein piezoelektrischer Aktuator angebracht, durch den die Siliziummembran zum Öffnen und Schließen der Durchlaßöffnung verschoben werden kann.

Die FR-A-2642812 beschreibt ein Mikroventil, bei dem ein Stößelbauglied mittels piezoelektrischer membranartiger Bauglieder, die mit Flächenelektroden versehen sind, derart gelagert ist, daß mittels des Stößelbauglieds eine Durchlaßöffnung geöffnet und verschlossen werden kann.

Ausgehend von dem beschriebenen Stand der Technik liegt der vorliegenden Erfindung die Aufgabe zugrunde, piezoelektrisch betriebene Mikroventile zu schaffen, die eine gegenüber bekannten piezoelektrisch betriebenen Mikroventilen deutlich reduzierte Baugröße aufweisen.

Diese Aufgabe wird durch ein Mikroventil gemäß Anspruch 1 und ein Mikroventil gemäß Anspruch 12 gelöst.

Die vorliegende Erfindung schafft ein Mikroventil, das einen Grundkörper mit einer Durchlaßöffnung, einen Stößel, eine Aufhängungsvorrichtung, durch die der Stößel gegenüber dem Grundkörper derart führbar ist, daß die Durchlaßöffnung durch den Stößel verschlossen oder freigegeben werden kann, und eine piezoelektrische Betätigungsvorrichtung zur Betätigung des Stößels, deren Erstreckung in Längsrichtung durch das Anlegen einer elektrischen Spannung veränderbar ist, aufweist. In Längsrichtung voneinander beabstandete Enden der piezoelektrischen Betätigungsvorrichtung sind mit in Längsrichtung voneinander beabstandeten Enden der Aufhängungsvorrichtung verbunden. Bei dem erfindungsgemäßen Mikroventil wird eine durch das Anlegen einer elektrischen Spannung bewirkte Änderung der Erstreckung der piezoelektrischen Betätigungsvorrichtung in Längsrichtung in eine Bewegung des Stößels senkrecht zu der Längsrichtung übersetzt, derart, daß dadurch die Durchlaßöffnung freigegeben oder verschlossen wird. Die Aufhängungsvorrichtung ist an zumindest zwei beabstandeten Stellen derselben derart an dem Grundkörper befestigt, daß eine im wesentlichen spannungsfreie Drehbewegung des Stößel-Chips möglich ist.

Die vorliegende Erfindung schafft ferner ein Mikroventil mit einem Grundkörper mit einer Durchlaßöffnung, einem Stößel und einer Aufhängungsvorrichtung, durch die der Stößel gegenüber dem Grundkörper derart führbar ist, daß die Durchlaßöffnung durch den Stößel verschlossen oder freigegeben werden kann, wobei der Stößel die Durchlaßöffnung verschließt, wenn keine Spannung an dem piezoelektrischen Betätigungsglied anliegt, und die Durchgangsöffnung offen läßt, wenn eine Spannung an dem piezoelektrischen Betätigungsglied anliegt. Eine piezoelektrische Betätigungsvorrichtung zur Betätigung des Stößels, deren Erstreckung in Längsrichtung durch das Anlegen einer elektrischen Spannung veränderbar ist, ist vorgesehen. Das piezoelektrische Betätigungsglied ist mittels einer Befestigungsvorrichtung an der dem Stößel und der Aufhängungsvorrichtung abgewandten Seite an dem Grundkörper angebracht, wobei die piezoelektrische Betätigungsvorrichtung zumindest ein Durchgangsloch aufweist, das über die Befestigungsvorrichtung in fluidmäßiger Verbindung mit dem Durchgangsloch in dem Grundkörper ist. Der Stößel verschließt das Durchgangsloch des Grundkörpers durch das Verschließen des Durchgangslochs des Betätigungsglieds. In Längsrichtung voneinander beabstandete Enden der piezoelektrischen Betätigungsvorrichtung sind mit in Längsrichtung voneinander beabstandeten Enden der Aufhängungsvorrichtung verbunden, wobei eine durch das Anlegen einer elektrischen Spannung an die piezoelektrische Betätigungsvorrichtung bewirkte Änderung der Erstreckung der piezoelektrischen Betätigungsvorrichtung in Längsrichtung bewirkt eine Bewegung des Stößels im wesentlichen senkrecht zu der Längsrichtung, um dadurch die Durchlaßöffnung freizugeben oder zu verschließen.

Die vorliegende Erfindung bezieht sich auf eine besondere Bauweise von Mikroventilen, die den inversen piezoelektrischen Effekt als Antriebsmechanismus benutzen, und insbesondere auf eine besondere Ausgestaltung des piezoelektrischen Antriebsmechanismusses, der eine für einen großen Durchfluß benötigte Auslenkung bei einer reduzierten Baugröße eines piezoelektrisch betriebenen Mikroventils ermöglicht. Dieser piezoelektrische Aktor, der auch als Piezokeramik bezeichnet werden kann, ist für Mikroventile mit einer unterschiedlichen Anzahl von Wegen und Schaltzuständen verwendbar. Ein 2/2-NO-Ventil weist beispielsweise zwei Wege und zwei Schaltzustände auf, und ist normal offen, d.h. ohne das Anlegen einer Spannung an den Aktor ist ein Weg, d.h. eine Durchlaßöffnung, des Ventils durch den Ventilstößel nicht verschlossen. Ein 2/2-NG-Ventil weist zwei Wege und zwei Schaltzustände auf, wobei eine Durchlaßöffnung im Ruhezustand geschlossen ist. Ferner sind Ventile mit drei Wegen und zwei Schaltzuständen oder Ventile höherer Ordnung realisierbar.

Durch das erfindungsgemäße Mikroventil kann aufgrund einer mechanischen Übersetzung zwischen einem Stößel und einer piezoelektrischen Betätigungsvorrichtung, wobei die mechanische Übersetzung durch die Aufhängungsvorrichtung des Stößels geliefert wird, die Baugröße von piezoelektrisch betriebenen Ventilen deutlich reduziert werden. Durch die Hebelübersetzung wird eine relativ geringe laterale Schrumpfung, d.h. eine Änderung der Erstreckung der Piezokeramik in Längsrichtung, in eine relativ hohe vertikale Auslenkung, d.h. eine hohe Auslenkung senkrecht zu der Erstreckung der Piezokeramik in Längsrichtung, des Ventilstößels über dem Ventilsitz umgewandelt. Dadurch sind auf geringer Fläche große Öffnungsweiten des Ventils realisierbar. Die nachfolgend beschriebenen erfindungsgemäßen Ventile können zudem im Gegensatz zu den bisher bekannten Ausführungen mit einer, in der Halbleitertechnik üblichen, Full-Wafer-Verbindungstechnik montiert werden. Dies bedeutet, daß auf einem Substrat nebeneinander sehr viele identische Bauteile gleichzeitig hergestellt werden können. Durch Vereinzeln am Ende des Herstellungsprozesses werden dann die einzelnen Ventile gefertigt. Durch die Verwendung dieses sogenannten Batch-Verfahrens steigt die Reproduzierbarkeit der Bauteilspezifikationen. Durch diese Herstellung wird sowohl eine Kostenersparnis, da die Strukturen gleichzeitig gefertigt werden können, als auch eine Vereinfachung, da bereits ein Funktionstest im Waferverbund stattfinden kann, erreicht.

Die Baugröße von piezoelektrisch betriebenen Mikroventilen, die gemäß der vorliegenden Erfindung aufgebaut sind, kann bei gleichbleibendem Durchfluß im Vergleich zu bekannten Mikroventilen drastisch verringert sein. Dies ermöglicht eine höhere Packungsdichte, beispielsweise bei sogenannten Ventilinseln, wodurch es möglich wird, z.B. pneumatisch gesteuerte Maschinen zu verkleinern oder überhaupt erst zu realisieren. Vor allem auch der Einsatz von Mikroventilen im Kraftfahrzeugbereich ist eng mit der Baugröße und dem daraus resultierenden Gewicht der Mikroventile gekoppelt. Daneben können, wenn die bisherige Baugröße beibehalten wird, höhere Durchflüsse erzielt werden. Somit können schnellere Schaltzeiten, beispielsweise von Arbeitskolben erreicht werden. Durch die verringerte Baugröße, die für einen gegebenen Durchfluß nötig ist, sind ferner die Kosten für die Gehäusung reduziert.

Bei vorteilhaften Ausführungsbeispielen der vorliegenden Erfindung ist die Aufhängungsvorrichtung an zumindest zwei beabstandeten Stellen derselben mittels zumindest eines Drehgelenks an dem Grundkörper angebracht. Dabei sind die Aufhängungsvorrichtung, der Stößel und die drehgelenkartige Befestigung der Aufhängung an dem Grundkörper vorzugsweise einstückig aus einem mikromechanisch gefertigten Chip gebildet. Somit ermöglicht die vorliegende Erfindung eine spannungsfreie Drehbewegung des Stößel-Chips, obwohl der Stößel-Chip mit einer ausreichend großen Fläche an der Grundplatte angebracht ist.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1A und 1B: schematische Querschnittansichten zur Veranschaulichung des piezoelektrischen Aktors für ein Mikroventil gemäß der vorliegenden Erfindung;
- Fig. 2A und 2B: schematische Querschnittansichten eines ersten Ausführungsbeispieles eines Mikroventils gemäß der vorliegenden Erfindung im Ruhezustand bzw. im aktivierten Zustand;
- Fig. 3: eine schematische Querschnittansicht eines zweiten Ausführungsbeispiels eines Mikroventils gemäß der vorliegenden Erfindung im Ruhezustand;
- Fig. 4: eine schematische Querschnittansicht eines vierten Ausführungsbeispiels eines Mikroventils gemäß der vorliegenden Erfindung im Ruhezustand;
- Fig. 5A und 5B: eine schematische Querschnittsdarstellung eines fünften Ausführungsbeispiels des Mikroventils gemäß der vorliegenden Erfindung im Ruhezustand bzw. im aktivierten Zustand; und
- Fig. 6: eine schematische Querschnittsdarstellung eines sechsten Ausführungsbeispiel eines Mikroventils gemäß der vorliegenden Erfindung im aktivierten Zustand.

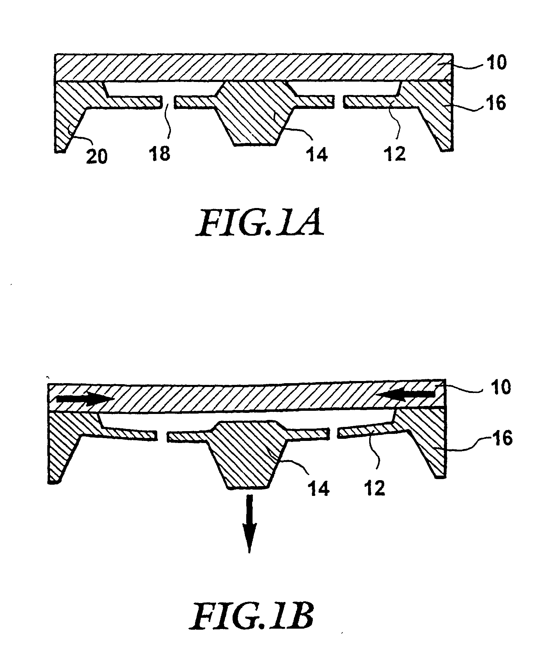

Ein Betätigungsglied, bestehend aus einer Piezokeramik und einem mittels einer Aufhängungsvorrichtung 12 an der Piezokeramik 10 befestigten Stößel 14, ist in den Fig. 1A und 1B dargestellt. Die Piezokeramik 10 dient als eigentlicher Antrieb. An die Piezokeramik 10 ist in üblicher Weise über an derselben angebrachte Elektroden (nicht gezeigt) eine Spannung anlegbar.

An der Piezokeramik 10 ist ein mikromechanisch strukturierter Chip 16 angebracht. Der Chip ist bei einem bevorzugten Ausführungsbeispiel der vorliegenden Erfindung ein Halbleiter-Chip. Der mikromechanisch strukturierte Chip 16 kann beispielsweise mittels herkömmlicher Ätztechniken gefertigt sein. Als Chip-Material kann beispielsweise Silizium verwendet sein. Alternativ kann der Chip auch ein mittels eines Spritzguß-Verfahrens, z.B. LIGA-Verfahrens (LIGA = Lithographie, Galvanische Abformung), gefertigter Chip sein und somit aus Kunststoff bestehen.

Bei dem in den Fig. 1A und 1B dargestellten Betätigungsglied ist der Chip an allen Rändern fest mit der Piezokeramik verbunden, während der im wesentlichen in der Mitte des mikromechanisch strukturierten Chips befindliche, an den elastischen Aufhängungen 12 befestigte Stößel 14 vertikal beweglich ist. Bei einem 2/2-Wege-Ventil ist es jedoch nicht notwendigerweise erforderlich, daß der Chip an allen Rändern mit der Piezokeramik verbunden ist, da es für die Wirkungsweise der erfindungsgemäßen piezoelektrischen Betätigung des Stößels ausreicht, wenn der Chip zumindest an zwei voneinander beabstandeten Enden, die vorzugsweise sich gegenüberliegende Enden sind, mit der Piezokeramik verbunden ist, wobei der Stößel in einem Bereich zwischen den an der Piezokeramik befestigten Abschnitten des Chips angeordnet ist.

Die elastischen Aufhängungen 12 können aus einer Membran bestehen, in der Durchführungen 18 für einen Druckausgleich angeordnet sein können. Die elastischen Aufhängungen können jedoch auch aus einzelnen Streifen bestehen, die den Stößel 14 mit dem an der Piezokeramik befestigten Teil des mikromechanisch strukturierten Chips 16 verbinden. Entlang des Umfangs weist der mikromechanisch gefertigte Chip eine sich von der Piezokeramik 10 weg erstreckende Umrandung 20 auf, die für eine Befestigung des Betätigungsglieds an einem Ventilgrundkörper dienen kann.

In Fig. 1A ist der Zustand des Betätigungsglieds dargestellt, wenn keine Spannung an die Piezokeramik 10 angelegt ist. Wird eine elektrische Spannung an die Piezokeramik angelegt, verringert die Piezokeramik 10 ihre laterale Ausdehnung. Dies ist durch die parallel zu der Piezokeramik verlaufenden Pfeile in den Figuren, beispielsweise in Fig. 1B, dargestellt. Der entlang der Umrandung der Piezokeramik 10 mit derselben verbundene mikromechanisch strukturierte Chip 16 wird dabei gestaucht, wobei der Stößel 14 aufgrund der in dem mikromechanisch strukturierten Chip 16 auftretenden lateralen Druckspannung dazu tendiert, sich in vertikaler Richtung zu bewegen. Dies ist durch den Pfeil in Fig. 1B angezeigt. Bei einer geeigneten Formgebung des Chips 16 läßt sich hierbei eine Hebelwirkung erzielen, die den geringen lateralen Schrumpf der Piezokeramik 10 in eine hohe vertikale Auslenkung des Stößels 14 übersetzt und damit eine große Ventilöffnungsweite ermöglicht. Im Gegensatz dazu folgt bei Mikroventilen herkömmlicher Bauart der Ventilstößel direkt der Bewegung der Piezokeramik und ist damit in seiner Auslenkung auf den Wert der Auslenkung der Piezokeramik beschränkt.

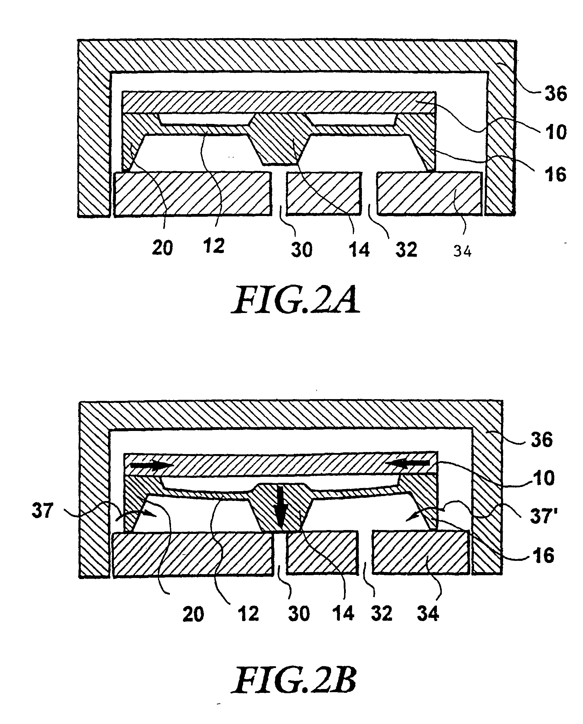

In den Fig. 2A und 2B ist ein erstes Ausführungsbeispiel eines Mikroventils gemäß der vorliegenden Erfindung dargestellt. Es handelt sich dabei um ein 2-2-NO-Mikroventil, das zwei Wege, d.h. zwei Durchlaßöffnungen, und zwei Schaltzustände aufweist, wobei das Mikroventil im deaktivierten Zustand geöffnet ist. Bei dem in den Fig. 2A und 2B dargestellten Ausführungsbeispiel des erfindungsgemäßen Mikroventils befinden sich die Ventilöffnungen 30 und 32 in einer Grundplatte 34, die beispielsweise aus Keramik besteht. Die Grundplatte 34 kann ferner gleichzeitig zur elektrischen Kontaktierung dienen. An den Ventilöffnungen 30 und 32 sind Fluidanschlüsse (nicht dargestellt) angebracht, beispielsweise ein Verbraucheranschluß und ein Druckanschluß.

Auf der Grundplatte 34 ist ein mikrostrukturierter Stößel-Chip 16, der bei diesem Ausführungsbeispiel dem Chip entspricht, der in den Fig. 1A und 1B dargestellt ist, entlang seiner Umrandung, d.h. entlang der Randnase 20, befestigt, derart, daß der Stößel 14 in der Mitte des mikromechanisch strukturierten Chips 16 frei beweglich ist. An dem mikromechanisch strukturierten Chip 16 ist ferner, wie bezugnehmend auf die Fig. 1A und 1B beschrieben wurde, eine Piezokeramik 10 angebracht. Die der Grundplatte 34 zugewandte Seite des Stößels 14 ist dabei gegenüber der Oberfläche der Grundplatte 34 etwas zurückgesetzt. Dadurch wird die Höhe der Ventilöffnung definiert.

Bei dem in den Fig. 2A und 2B dargestellten Ausführungsbeispiel ist der der Grundplatte 34 zugewandte Chiprand, d.h. die Fläche der Randnase 20, die an der Grundplatte 34 befestigt ist, sehr schmal ausgestaltet, was eine spannungsfreie Drehbewegung des Stößel-Chips ermöglicht. An der Grundplatte 34 ist bei dem dargestellten Ausführungsbeispiel ferner eine Gehäuseabdeckung 36 angebracht, die eine Kapselung für den oben beschriebenen Aufbau liefert und ferner als Gasführung verwendet werden kann.

Wird nun eine elektrische Spannung an die Piezokeramik 10 angelegt, so ändert dieselbe ihre Erstreckung in Längsrichtung, d.h. sie verringert ihre laterale Ausdehnung. Dies ist in Fig. 2B wiederum durch die parallel zur Längsausdehnung der Piezokeramik 10 verlaufenden Pfeile angezeigt. Der an der Umrandung mit der Piezokeramik 10 verbundene mikrostrukturierte Stößel-Chip 16 wird dabei gestaucht und tendiert dazu, die auftretende laterale Druckspannung durch ein Ausweichen in vertikaler Richtung zu reduzieren. Durch diese vertikale Bewegung des Stößels 14 wird bewirkt, daß die Durchlaßöffnung oder Ventilöffnung 30 der Grundplatte 34 verschlossen wird. Durch die Formgebung des mikrostrukturierten Stößel-Chips 16 kann eine Übersetzung einer geringen lateralen Kontraktion der Piezokeramik 10 in eine hohe vertikale Auslenkung des Stößels 14 erreicht werden. Die in Fig. 2B dargestellten Pfeile 37 und 37' stellen ferner die nahezu spannungsfreie Drehbarkeit des Stößel-Chips dar, die durch die schmale Befestigungsfläche des mikrostrukturierten Stößel-Chips an der Grundplatte 34 gewährleistet ist. Durch die Wahl der Richtung der Fluidströmung durch das Ventil kann das Öffnen des Ventils unterstützt werden, oder alternativ das Schließen desselben, wodurch sich ein verbessertes Leckratenverhalten ergibt.

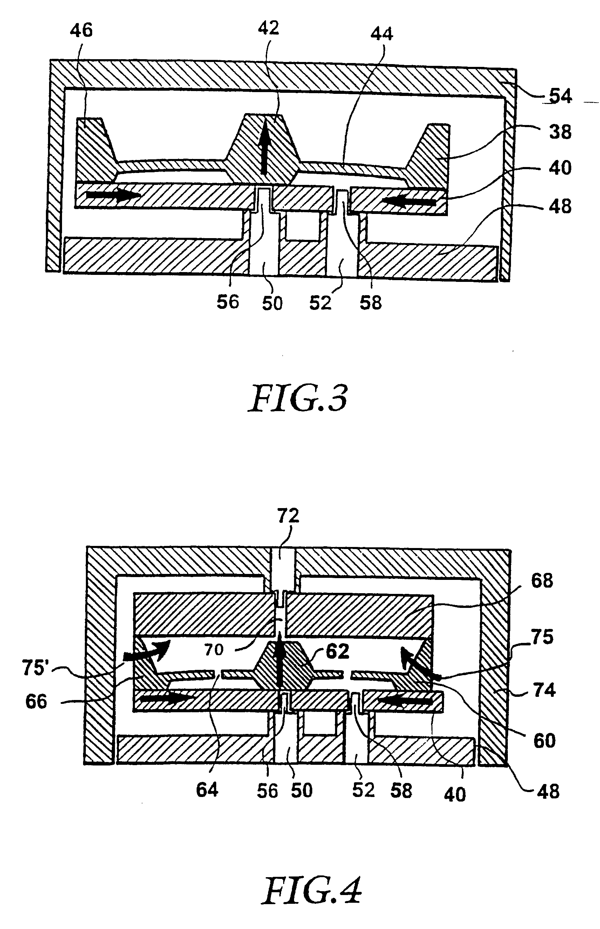

In Fig. 3 ist ein zweites Ausführungsbeispiel der vorliegenden Erfindung dargestellt. Bei diesem Ausführungsbeispiel handelt es sich um ein 2/2-NG-Ventil, das zwei Wege und zwei Schaltzustände aufweist und im deaktivierten Zustand geschlossen ist. Bei dem in Fig. 3 dargestellten Ausführungsbeispiel ist wiederum ein mikromechanisch strukturierter Stößel-Chip 38 an einer Piezokeramik 40 angebracht. Der Stößel-Chip 38 weist wiederum einen Stößel 42 auf, der über eine elastische Aufhängung 44 an einem entlang des Umfangs des Stößel-Chips mit der Piezokeramik 40 verbundenen Teil 46 des Stößel-Chips 38 angebracht ist. Die Montage des Stößel-Chips an der Piezokeramik 40 erfolgt in diesem Fall derart, daß der Ventilstößel 42 durch den Montageprozess bereits mit einer gewissen mechanischen Vorspannung beaufschlagt ist, und auf dem Ventilsitz aufliegt, wobei der Ventilsitz dadurch verschlossen wird.

Das in Fig. 3 dargestellte Ausführungsbeispiel weist wiederum eine beispielsweise aus Keramik bestehende Grundplatte 48, die zwei Ventilöffnungen 50 und 52 aufweist, sowie einen Gehäusedeckel 54 auf. Bei diesem Ausführungsbeispiel weist jedoch auch die Piezokeramik 40 zwei Durchlaßöffnungen 56 und 58 auf. Die Piezokeramik 40 ist über eine Befestigungsvorrichtung, die jedoch eine laterale Expansion und Kontraktion der Piezokeramik zuläßt, mit der Grundplatte 48 derart verbunden, daß die Ventilöffnung 50 der Grundplatte 48 mit der Durchlaßöffnung 56 der Piezokeramik 40 fluidmäßig verbunden ist, und daß die Ventilöffnung 52 der Grundplatte 48 mit der Durchlaßöffnung 58 der Piezokeramik 40 verbunden ist.

In dem Fall, in dem keine Spannung an die Piezokeramik angelegt ist, verschließt der Stößel 42 bei dem in Fig. 3 dargestellten Ausführungsbeispiel der vorliegenden Erfindung die Durchlaßöffnung 56 in der Piezokeramik 40 und somit die mit der Durchlaßöffnung 56 fluidmäßig verbundene Ventilöffnung 50 in der Grundplatte 48. Wird nun eine Spannung an die Piezokeramik 40 angelegt, verringert dieselbe durch den inversen piezoelektrischen Effekt ihre Ausdehnung in Längsrichtung, wobei diese Schrumpfung in eine Vertikalbewegung des Stößels 42 nach oben übersetzt wird. Dadurch wird die Durchlaßöffnung 56 in der Piezokeramik 40 freigegeben und damit auch die Ventilöffnung 50 in der Grundplatte 48. Bei diesem Ventil kann die Richtung der Fluidströmung derart gewählt werden, daß das Schließen des Ventils unterstützt wird. Dies führt zu einem verbesserten Schließ- und Leckratenverhalten.

Ein drittes Ausführungsbeispiel eines Mikroventils gemäß der vorliegenden Erfindung ist in Fig. 4 dargestellt. Die Grundplatte 48 mit Durchlaßöffnungen 50, 52 und die Piezokeramik 40 mit Durchlaßöffnungen 56 und 58 weisen bei dem in Fig. 4 dargestellten Ausführungsbeispiel den gleichen Aufbau wie bei dem bezugnehmend auf Fig. 3 beschriebenen Ausführungsbeispiel auf. Auf der Piezokeramik ist wiederum ein mikromechanisch strukturierter Stößel-Chip 60 angeordnet. Die elastischen Aufhängungen, durch die der Stößel 62 an dem an der Piezokeramik 40 befestigten Teil des Stößel-Chips 60 befestigt ist, weisen Fluiddurchführungen auf, die beispielhaft als Unterbrechungen 64 dargestellt sind.

Der mikromechanisch strukturierte Stößel-Chip 60 weist wiederum eine Randnase 66 auf, auf der bei dem dritten Ausführungsbeispiel der vorliegenden Erfindung ein weiterer Ventilsitz 68 angeordnet ist. Der Ventilsitz 68 weist eine Durchführungsöffnung 70 auf. Die Durchführungsöffnung 70 ist fluidmäßig mit einer Durchführungsöffnung 72 eines den beschriebenen Aufbau kapselnden Gehäusedeckels 74 verbunden. Durch die Pfeile 75 und 75' in Fig. 4 ist wiederum die nahezu spannungsfreie Drehbarkeit, die durch die schmale obere Fläche der Randnase 66 gewährleistet ist, angezeigt.

Das in Fig. 4 dargestellte Mikroventil kann als 3/2-Wege-Ventil bezeichnet werden. Ein solches Ventil weist 3 Wege und 2 Schaltzustände auf. Bei einem derartigen Ventil wird naturgemäß ein zweiter Ventilsitz benötigt. Dieser ist bei dem dargestellten Ausführungsbeispiel aus einem weiteren Chip, beispielsweise Keramik, Silizium oder dergleichen, ausgebildet. Bei einem derartigen 3/2-Wege-Ventil, wie es beispielsweise bezugnehmend auf Fig. 4 beschrieben wurde, ist der Stößel-Chip entlang seines gesamten Umfangs vollständig sowohl mit der Piezokeramik als auch dem zweiten Ventilsitz verbunden, da durch den Raum zwischen dem Chip und der Piezokeramik und den Raum zwischen dem Chip und dem zweiten Ventilsitz Fluid geführt wird.

Bei dem in Fig. 4 dargestellten Mikroventil ist die Ventilöffnung 50 im entspannten Zustand der Piezokeramik 40 geschlossenen. Wird nun eine Spannung an die Piezokeramik 40 angelegt, verringert sich die Längsausdehnung derselben, wodurch eine Vertikalbewegung des Stößels 62 nach oben bewirkt wird. Dadurch schließt der Stößel 62 die Durchlaßöffnung 70 in dem zweiten Ventilsitz 68 und damit die Öffnung 72 in dem Gehäusedeckel 74.

3/2-Wege-Ventile werden aus Sicherheitsgründen zumeist im Normal-Geschlossen-Modus betrieben, sind also ohne anliegende Energieversorgung geschlossen. Aus diesem Grunde ist es vorteilhaft, die im Montageprozeß auf den Ventilstößel aufgebrachte Vorspannung so hoch zu wählen, daß der Stößel auch bei Druckbeaufschlagung von unten am Ventilsitz verbleibt und das Ventil damit geschlossen bleibt.

In Abweichung von den speziell beschriebenen Ausführungsbeispielen umfaßt die vorliegende Erfindung auch Mikroventile, die sich bezüglich ihres Aufbaus, der Anordnung der Durchlaßöffnungen, usw. von den beschriebenen Ausführungsbeispielen unterscheiden, solange bei diesen Mikroventilen die erfindungsgemäße Betätigung des Ventilstößels verwendet ist.

Die vorliegende Erfindung schafft somit Mikroventile, die bei einer relativ geringen Baugröße relativ große Durchlaßöffnungen ermöglichen. Ferner ermöglichen die erfindungsgemäßen Mikroventile die Herstellung derselben mittels einer in der Halbleitertechnik üblichen Full-Wafer-Verbindungstechnik. Die erfindungsgmäßen Mikroventile weisen somit gegenüber bekannten Mikroventilen Vorteile bezüglich der Einfachheit der Herstellung sowie ferner eine Kostenersparnis bei derselben auf.

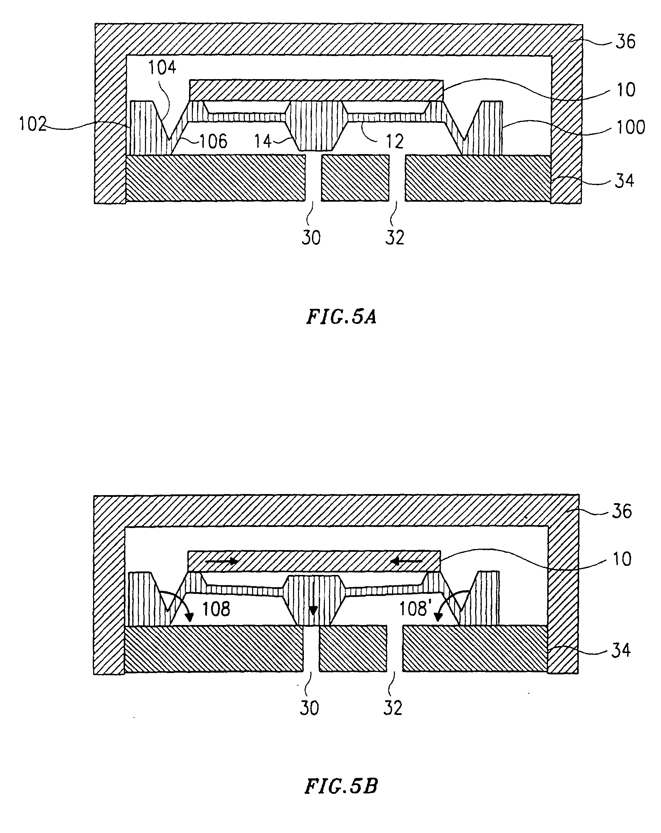

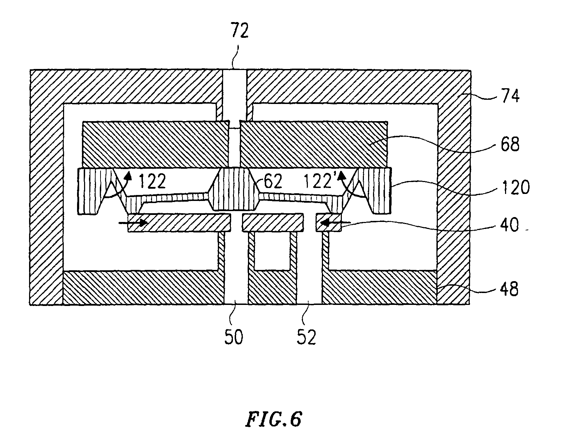

Bezugnehmend auf die Fig. 5A, 5B und 6 werden nachfolgend ein fünftes und ein sechstes Ausführungsbeispiel eines Mikroventils gemäß der vorliegenden Erfindung beschrieben. Dabei sind für gleiche Teile wie in den Fig. 1 bis 4 gleiche Bezugszeichen verwendet, wobei diese Teile nicht nochmals getrennt beschrieben werden.

Das in den Fig. 5A und 5B dargestellte fünfte Ausführungsbeispiel unterscheidet sich von dem in den Fig. 2A und 2B dargestellten Mikroventil dadurch, daß der mikromechanisch gefertigte Chip 100 nunmehr eine breitere Randnase 102 aufweist, in deren von dem Grundkörper 34 abgewandten Oberfläche eine Ausnehmung 104 vorgesehen ist. Durch diese Ausnehmung zusammen mit der Ausnehmung, die durch die Ausbildung der Aufhängungsvorrichtung und des Stößels definiert ist, ist ein Steg 106 festgelegt, der mit der Randnase 102 zusammenwirkt, um ein Drehgelenk zu definieren.

Die Pfeile 108 und 108' in Fig. 5B zeigen, wie dieses Vorsehen eines Drehgelenks an den Befestigungspunkten der Aufhängungsvorrichtung 12 an dem Grundkörper 34 eine spannungsfreie Drehbewegung des Stößel-Chips 100, d.h. der Aufhängungsvorrichtung 12, und somit ein spannungsfreies Öffnen und Schließen der Öffnung 30 der Grundplatte ermöglicht. Ein Drehgelenk kann an einer Mehrzahl von Stellen umfangsmäßig um den Stößel-Chip 100 vorgesehen sein. Alternativ kann ein einziges Drehgelenk den Stößel-Chip umfangsmäßig vollständig umgeben. Wenn das Drehgelenk den Stößel-Chip 100 vollständig umgibt, muß die Öffnung 32 innerhalb der von diesem Drehgelenk eingeschlossenen Fläche in dem Grundkörper 34 angeordnet sein. Ist der Stößel-Chip 100 jedoch nicht um den gesamten Umfang mit der Grundplatte 34 verbunden, muß nur gewährleistet sein, daß die Öffnung 30 und 32 eine fluidische Verbindung aufweisen, wenn die Öffnung 30 geöffnet ist. Der Stößel-Chip 100 kann beispielsweise aus Silizium bestehen, während das Gehäuse 36 beispielsweise aus Kunststoff bestehen kann.

In Fig. 6 ist ein sechstes Ausführungsbeispiel der vorliegenden Erfindung dargestellt, das im wesentlichen dem bezugnehmend auf Fig. 4 beschriebenen Ausführungsbeispiel entspricht, wobei wiederum die Anbringung des Stößel-Chips 120 an der Grundplatte 68 unterschiedlich ist. Wiederum ist der Stößel-Chip 120 drehgelenkartig an der Grundplatte 68 angebracht, wobei die spannungsfreie Drehbarkeit des Stößel-Chips 120 durch die Pfeile 122 und 122' in Fig. 6 angedeutet ist. Die Ausgestaltung der drehgelenkartigen Befestigung entspricht hierbei wiederum der in den Fig. 5A und 5B gezeigten.

Durch den bezüglich des fünften und des sechsten Ausführungsbeispiels beschriebenen Aufbau kann die Funktionsfähigkeit des piezoelektrisch betriebenen Mikroventils verbessert werden. Durch die Entkopplung der Drehbewegung von der Befestigung des strukturierten Siliziumchips auf der Grundplatte ergibt sich eine optimierte Befestigung in Form einer größeren Klebefläche, sowie ein reproduzierbares Verhalten bezüglich der Drehbewegung. Dies liegt in der Tatsache begründet, daß sich das Drehgelenk mit mikromechanischen Mitteln sehr genau fertigen läßt und damit an Genauigkeit einer Klebeverbindung weit überlegen ist. Bei der Klebeverbindung ergeben sich Belastungen, die zu einer Alterung und damit Änderung der mechanischen Eigenschaften führen. Dies ändert automatisch das Langzeitverhalten der Durchflußcharakteristik des Ventils. Durch die bezugnehmend auf die Fig. 5 und 6 beschriebenen Ausführungsbeispiele der vorliegenden Erfindung ist ein Weg gefunden worden, die alterungsfreie elastische Biegung des Siliziums zu nutzen. Damit kann ein erhöhter Durchfluß erwartet werden, da die Drehbewegung mit einem geringeren Kraftaufwand erzielt werden kann. Dies bewirkt, daß von der zu Verfügung stehenden Kraft des Piezoaktors ein größerer Teil in die Ausbildung eines größeren Hubs und damit einer hohen Ventilnennweite gesteckt werden kann. Somit wird sowohl eine Verbesserung der Reproduzierbarkeit in der Herstellung der Ventile, als auch eine Verbesserung im Langzeitverhalten der Ventile erreicht.

## Patentansprüche

1. Mikroventil mit folgenden Merkmalen:
einem Grundkörper (34; 68) mit einer Durchlaßöffnung (30; 50);
einem Stößel (14; 42; 62);
einer Aufhängungsvorrichtung (12; 44), durch die der Stößel (14; 42; 62) gegenüber dem Grundkörper (34; 68) derart führbar ist, daß die Durchlaßöffnung (30; 70) durch den Stößel (14; 42; 62) verschlossen oder freigegeben werden kann; und
einer piezoelektrischen Betätigungsvorrichtung (10; 40) zur Betätigung des Stößels (14; 42; 62), deren Erstreckung in Längsrichtung durch das Anlegen einer elektrischen Spannung veränderbar ist,
wobei in Längsrichtung voneinander beabstandete Enden der piezoelektrischen Betätigungsvorrichtung (10; 40) mit in Längsrichtung voneinander beabstandeten Enden der Aufhängungsvorrichtung (12; 44) verbunden sind, derart, daß die Aufhängungsvorrichtung (12; 44) ein Mittel zum Liefern einer mechanischen Übersetzung zwischen der Betätigungsvorrichtung (10; 40) und dem Stößel (14; 42; 62) bildet,
wobei eine durch das Anlegen einer elektrischen Spannung an die piezoelektrische Betätigungsvorrichtung (10; 40) bewirkte Änderung der Erstreckung der piezoelektrischen Betätigungsvorrichtung (10; 40) in Längsrichtung durch die Aufhängungsvorrichtung (12; 44) mechanisch in eine Bewegung des Stößels (14; 42; 62) im wesentlichen senkrecht zu der Längsrichtung übersetzt wird, um dadurch die Durchlaßöffnung (30; 70) freizugeben oder zu verschließen, und
wobei die Aufhängungsvorrichtung (12; 44) an zumindest zwei beabstandeten Stellen derselben durch drehgelenkartige Einrichtungen an dem Grundkörper (34; 68) befestigt ist.

2. Mikroventil gemäß Anspruch 1, bei dem die Aufhängungsvorrichtung (12; 44) und der Stößel (14; 42; 62) einstückig aus einem mikromechanisch strukturierten Chip (16; 38; 60; 100; 120) gebildet sind.

3. Mikroventil gemäß Anspruch 2, bei dem der mikromechanisch strukturierte Chip ein Halbleiter-Chip ist.

4. Mikroventil gemäß Anspruch 2, bei dem der mikromechanisch strukturierte Chip aus Kunststoff besteht.

5. Mikroventil gemäß einem der Ansprüche 2 bis 4, bei dem der mikromechanisch strukturierte Chip (16; 38; 60; 100; 120) an zumindest zwei voneinander beabstandeten Abschnitten entlang seines Umfangs mit der piezoelektrischen Betätigungsvorrichtung (10; 40) verbunden ist, einen oder eine Mehrzahl von verdünnten Bereichen (12; 44) aufweist, die die Aufhängungsvorrichtung darstellen, und einen zwischen den zwei mit der piezoelektrischen Betätigungseinrichtung (10; 40) verbunden Enden des Chips angeordneten, verdickten Bereich (14; 42; 62) aufweist, der den Stößel bildet.

6. Mikroventil gemäß einem der Ansprüche 2 bis 5, bei dem der mikromechanisch strukturierte Chip (16; 60) eine Randnase (20) aufweist, die an zumindest zwei voneinander beabstandeten Abschnitten entlang des Umfangs desselben von der dem piezoelektrischen Betätigungsglied (10) abgewandten Seite vorsteht, wobei der mikromechanisch strukturierte Chip mittels der Randnase (20) an dem Grundkörper (34; 68) befestigt ist.

7. Mikroventil gemäß einem der Ansprüche 1 bis 5, bei dem die Aufhängungsvorrichtung mittels zumindest eines Drehgelenks (102, 106) an dem Grundkörper (34; 68) angebracht ist.

8. Mikroventil gemäß einem der Ansprüche 1 bis 7, bei dem der Stößel (14) die Durchlaßöffnung (30) offenläßt, wenn keine elektrische Spannung an dem piezoelektrischen Betätigungsglied (10) anliegt, und die Durchlaßöffnung (30) verschließt, wenn eine Spannung an dem piezoelektrischen Betätigungsglied (10) anliegt.

9. Mikroventil gemäß Anspruch 6, bei dem der Grundkörper (34) eine zweite Durchlaßöffnung (32) aufweist, die innerhalb eines druch die Randnase (20) des mikromechanisch strukturierten Chips (16) festgelegten Bereichs in dem Grundkörper (34) angeordnet ist.

10. Mikroventil gemäß einem der Ansprüche 1 bis 7, bei dem der Stößel (42; 62) die Durchlaßöffnung (50) verschließt, wenn keine Spannung an dem piezoelektrischen Betätigungsglied (40) anliegt, und die Durchgangsöffnung (50) offen läßt, wenn eine Spannung an dem piezoelektrischen Betätigungsglied (40) anliegt.

11. Mikroventil gemäß einem der Ansprüche 1 bis 7, bei dem die piezoelektrische Betätigungsvorrichtung (40) durch eine Befestigungsvorrichtung an der dem Stößel (62) und der Aufhängungsvorrichtung abgewandten Seite an einem Gehäusebauglied (48) angebracht ist, wobei die Betätigungsvorrichtung (40) ferner zumindest ein Durchgangsloch (56) aufweist, das über die Befestigungsvorrichtung in fluidmäßiger Verbindung zu einem Durchgangsloch (50) in dem Gehäusebauglied ist, wobei der Stößel in einer ersten Endstellung das Durchgangsloch (56) in der piezoelektrischen Betätigungsvorrichtung (40) verschließt und in einer zweiten Endstellung das Durchgangsloch (70) in dem Grundkörper (68) verschließt, wobei der Stößel (62) durch das Anlegen oder Entfernen einer Spannung an das piezoelektrische Betätigungsglied (40) in die erste und zweite Endstellung bewegbar ist.

12. Mikroventil mit folgenden Merkmalen:
einem Grundkörper (48) mit einer Durchlaßöffnung (50);
einem Stößel (42);
einer Aufhängungsvorrichtung (44), durch die der Stößel (42) gegenüber dem Grundkörper (48) derart führbar ist, daß die Durchlaßöffnung (50) durch den Stößel (42) verschlossen oder freigegeben werden kann; und
einer piezoelektrischen Betätigungsvorrichtung (40) zur Betätigung des Stößels (42), deren Erstreckung in Längsrichtung durch das Anlegen einer elektrischen Spannung veränderbar ist,
wobei der Stößel (42) die Durchlaßöffnung (50) verschließt, wenn keine Spannung an der piezoelektrischen Betätigungsvorrichtung (40) anliegt, und die Durchgangsöffnung (50) offen läßt, wenn eine Spannung an der piezoelektrischen Betätigungsvorrichtung (40) anliegt,
wobei die piezoelektrische Betätigungsvorrichtung (40) mittels einer Befestigungsvorrichtung an der dem Stößel (42) und der Aufhängungsvorrichtung (44) abgewandten Seite an dem Grundkörper (48) angebracht ist, wobei die piezoelektrische Betätigungsvorrichtung (40) zumindest ein Durchgangsloch (56) aufweist, das über die Befestigungsvorrichtung in fluidmäßiger Verbindung mit dem Durchgangsloch (50) in dem Grundkörper (48) ist, und wobei der Stößel (42) das Durchgangsloch (50) des Grundkörpers (48) durch das Verschließen des Durchgangslochs (56) der Betätigungsvorrichtung (40) verschließt,
wobei in Längsrichtung voneinander beabstandete Enden der piezoelektrischen Betätigungsvorrichtung (40) mit in Längsrichtung voneinander beabstandeten Enden der Aufhängungsvorrichtung (44) verbunden sind, derart, daß die Aufhängungsvorrichtung (44) ein Mittel zum Liefern einer mechanischen Übersetzung zwischen der Betätigungsvorrichtung (40) und dem Stößel (42) bildet,
wobei eine durch das Anlegen einer elektrischen Spannung an die piezoelektrische Betätigungsvorrichtung (40) bewirkte Änderung der Erstreckung der piezoelektrischen Betätigungsvorrichtung (40) in Längsrichtung durch die Aufhängungsvorrichtung (44) mechanisch in eine Bewegung des Stößels (42) im wesentlichen senkrecht zu der Längsrichtung übersetzt wird, um dadurch die Durchlaßöffnung (50) freizugeben oder zu verschließen.

13. Mikroventil gemäß Anspruch 12, bei dem die Aufhängungsvorrichtung (44) und der Stößel (42) einstückig aus einem mikromechanisch strukturierten Chip (38) gebildet sind.

14. Mikroventil gemäß Anspruch 12 oder 13, bei dem der mikromechanisch strukturierte Chip ein Halbleiter-Chip ist.

15. Mikroventil gemäß Anspruch 12 oder 13, bei dem der mikromechanisch strukturierte Chip aus Kunststoff besteht.

16. Mikroventil gemäß einem der Ansprüche 13 bis 15, bei dem der mikromechanisch strukturierte Chip (16; 38; 60) an zumindest zwei voneinander beabstandeten Abschnitten entlang seines Umfangs mit der piezoelektrischen Betätigungsvorrichtung (10; 40) verbunden ist, einen oder eine Mehrzahl von verdünnten Bereichen (12; 44) aufweist, die die Aufhängungsvorrichtung darstellen, und einen zwischen den zwei mit der piezoelektrischen Betätigungseinrichtung (10; 40) verbunden Enden des Chips (16; 38; 60) angeordneten, verdickten Bereich (14; 42; 62) aufweist, der den Stößel bildet.

## Claims

1. A microvalve comprising:
a base element (34; 68) provided with a passage opening (30; 50);
a tappet (14; 42; 62);
a suspension device (12; 44) by means of which the tappet (14; 42; 62) can be guided relative to the base element (34; 68) in such a way that the passage opening (30; 70) can be closed or opened by said tappet (14; 42; 62); and
a piezoelectric actuator (10; 40) for actuating the tappet (14; 42; 62), the longitudinal dimensions of said piezoelectric actuator being adapted to be changed by the application of an electric voltage;
wherein longitudinally spaced ends of the piezoelectric actuator (10; 40) are connected to longitudinally spaced ends of the suspension device (12; 44) in such a way that the suspension device (12; 44) constitutes a means for providing a mechanical translation between the actuator (10; 40) and the tappet (14; 42; 62),
wherein a change in the longitudinal dimensions of the piezoelectric actuator (10; 40) caused by the application of an electric voltage to said piezoelectric actuator (10; 40) is mechanically translated by said suspension device (14; 44) into a movement of the tappet (14; 42; 62) essentially at right angles to said longitudinal direction whereby the passage opening (30; 70) will be opened or closed, and
wherein the suspension device (12; 44) is secured, at at least two spaced points thereof, to the base element (34; 68) with the aid of hingelike means.

2. A microvalve according to claim 1, wherein the suspension device (12; 44) and the tappet (14; 42; 62) are formed integrally from a micromechanically structured chip (16; 38; 60; 100; 120).

3. A microvalve according to claim 2, wherein the micromechanically structured chip is a semiconductor chip.

4. A microvalve according to claim 2, wherein the micromechanically structured chip consists of plastic material.

5. A microvalve according to one of the claims 2 to 4, wherein the micromechanically structured chip (16; 38; 60; 100; 120) is connected to the piezoelectric actuator (10; 40) in at least two spaced portions along the periphery thereof, said micromechanically structured chip including one or a plurality of portions of reduced thickness (12; 44), which constitute the suspension device, and one portion of increased thickness (14; 42; 62) which is arranged between the two chip ends connected to the piezoelectric actuator (10; 40) and which constitutes the tappet.

6. A microvalve according to one of the claims 2 to 5, wherein the micromechanically structured chip (16; 60) is provided with a peripheral projection (20) projecting in at least two spaced portions along the periphery of said chip on the side facing away from the piezoelectric actuator (10), the micromechanically structured chip being secured to the base element (34; 68) by means of said peripheral projection (20).

7. A microvalve according to one of the claims 1 to 5, wherein the suspension device is attached to the base element (34; 68) by means of at least one hinge (102, 106).

8. A microvalve according to one of the claims 1 to 7, wherein the tappet (14) leaves the passage opening (30) open when no electric voltage is applied to the piezoelectric actuator (10) and closes said passage opening (30) when a voltage is applied to said piezoelectric actuator (10).

9. A microvalve according to claim 6, wherein the base element (34) is provided with a second passage opening (32) which is arranged in an area of said base element (34) determined by the peripheral projection (20) of the micromechanically structured chip (16).

10. A microvalve according to one of the claims 1 to 7, wherein the tappet (42; 62) closes the passage opening (50) when no voltage is applied to the piezoelectric actuator (40) and leaves said passage opening (50) open when a voltage is applied to said piezoelectric actuator (40).

11. A microvalve according to one of the claims 1 to 7, wherein the piezoelectric actuator (40) is attached to a casing component (48) by a fastening device on the side facing away from the tappet (62) and the suspension device, said actuator (40) being additionally provided with at least one passage opening (56) which is in fluid communication with a passage opening (50) in the casing component via the fastening device, said tappet closing the passage opening (56) in the piezoelectric actuator (40) at a first end position and the passage opening (70) in the base element (68) at a second end position, and said tappet (62) being movable to said first and second end positions when a voltage is applied to or removed from the piezoelectric actuator (40).

12. A microvalve comprising:
a base element (48) provided with a passage opening (50);
a tappet (42);
a suspension device (44) by means of which the tappet (42) can be guided relative to the base element (48) in such a way that the passage opening (50) can be closed or opened by said tappet (42); and
a piezoelectric actuator (40) for actuating the tappet (42), the longitudinal dimensions of said piezoelectric actuator (40) being adapted to be changed by the application of an electric voltage,
wherein the tappet (42) closes the passage opening (50) when no electric voltage is applied to the piezoelectric actuator (40) and leaves said passage opening (50) open when a voltage is applied to said piezoelectric actuator (40),
wherein the piezoelectric actuator (40) is attached to the base element (48) by a fastening device on the side facing away from the tappet (42) and the suspension device (44), said piezoelectric actuator (40) being provided with at least one passage opening (56) which is in fluid communication with the passage opening (50) in the base element (48) via the fastening device, and said tappet (42) closing the passage opening (50) of said base element (48) by closing the passage opening (56) of the actuator (40),
wherein longitudinally spaced ends of the piezoelectric actuator (40) are connected to longitudinally spaced ends of the suspension device (44) in such a way that the suspension device (44) constitutes a means for providing a mechanical translation between the actuator (40) and the tappet (42),
wherein a change in the longitudinal dimensions of the piezoelectric actuator (40) caused by the application of an electric voltage to said piezoelectric actuator (40) is mechanically translated by said suspension device (44) into a movement of the tappet (42) essentially at right angles to the longitudinal direction whereby the passage opening (50) will be opened or closed.

13. A microvalve according to claim 12, wherein the suspension device (44) and the tappet (42) are formed integrally from a micromechanically structured chip (38).

14. A microvalve according to claim 12 or 13, wherein the micromechanically structured chip is a semiconductor chip.

15. A microvalve according to claim 12 or 13, wherein the micromechanically structured chip consists of plastic material.

16. A microvalve according to one of the claims 13 to 15, wherein the micromechanically structured chip (16; 38; 60) is connected to the piezoelectric actuator (10; 40) in at least two spaced portions along the periphery thereof, said micromechanically structured chip including one or a plurality of portions of reduced thickness (12; 44), which constitute the suspension device, and one portion of increased thickness (14; 42; 62) which is arranged between the two chip ends connected to the piezoelectric actuator (10; 40) and which constitutes the tappet.

## Revendications

1. Microsoupape, aux caractéristiques suivantes :
un corps de base (34 ; 68) avec une ouverture de passage (30 ; 50);
un poussoir (14 ; 42 ; 62) ;
un dispositif de suspension (12 ; 44) par lequel le poussoir (14; 42; 62) peut être guidé par rapport au corps de base (34; 68) de telle sorte que l'ouverture de passage (30; 70) puisse être obturée ou dégagée par le poussoir (14 ; 42; 62); et
un dispositif d'actionnement piézo-électrique (10; 40) destiné à actionner le poussoir (14; 42 ; 62), dont l'extension dans le sens longitudinal peut être modifiée par l'application d'une tension électrique,
des extrémités du dispositif d'actionnement piézo-électrique (10; 40), distantes l'une de l'autre dans le sens longitudinal, étant reliées à des extrémités du dispositif de suspension (12; 44), distantes l'une de l'autre dans le sens longitudinal, de sorte que le dispositif de suspension (12; 44) constitue un moyen de fourniture d'une transmission mécanique entre le dispositif d'actionnement (10 ; 40) et le poussoir (14 ; 42 ; 62),
une modification de l'extension du dispositif d'actionnement piézo-électrique (10; 40) dans le sens longitudinal provoquée par l'application d'une tension électrique sur le dispositif d'actionnement piézo-électrique (10; 40) étant convertie mécaniquement par le dispositif de suspension (12 ; 44) en un déplacement du poussoir (14; 42; 62) sensiblement perpendiculaire au sens longitudinal, afin de dégager ou d'obturer ainsi l'ouverture de passage (30 ; 70), et
le dispositif de suspension (12; 44) étant, en au moins deux points de celui-ci distants l'un de l'autre, fixé au corps de base (34; 68) par des aménagements en forme d'articulation rotative.

2. Microsoupape suivant la revendication 1, dans laquelle le dispositif de suspension (12; 44) et le poussoir (14; 42; 62) sont formés d'une seule pièce à partir d'une puce structurée par procédé micromécanique (16 ; 38 ; 60 ; 100; 120).

3. Microsoupape suivant la revendication 2, dans laquelle la puce structurée par procédé micromécanique est une puce à semi-conducteur.

4. Microsoupape suivant la revendication 2, dans laquelle la puce structurée par procédé micromécanique est réalisée en matière synthétique.

5. Microsoupape suivant l'une des revendications 2 à 4, dans laquelle la puce structurée par procédé micromécanique (16 ; 38; 60; 100 ; 120) est assemblée sur son pourtour, sur au moins deux segments distants l'un de l'autre, avec le dispositif d'actionnement piézo-électrique (10 ; 40), présente une ou une pluralité de zones amincies (12 ; 44) représentant le dispositif de suspension, et présentant une zone épaissie (14 ; 42 ; 62) disposée entre les deux extrémités de la puce assemblées avec le dispositif d'actionnement piézo-électrique (10; 40) et constituant le poussoir.

6. Microsoupape suivant l'une des revendications 2 à 5, dans laquelle la puce structurée par procédé micromécanique (16; 60) présente un rebord (20) faisant saillie, sur au moins deux segments distants l'un de l'autre sur le pourtour de cette dernière, par rapport au côté éloigné du dispositif d'actionnement piézo-électrique (10), la puce structurée par procédé micromécanique étant fixée au corps de base (34; 68) à l'aide du rebord (20).

7. Microsoupape suivant l'une des revendications 1 à 5, dans laquelle le dispositif de suspension est placé sur le corps de base (34 ; 68) à l'aide d'au moins une articulation rotative (102, 106).

8. Microsoupape suivant l'une des revendications 1 à 7, dans laquelle le poussoir (14) laisse l'ouverture de passage (30) ouverte lorsqu'il n'est pas appliqué de tension électrique sur le dispositif d'actionnement piézo-électrique (10), et obture l'ouverture de passage (30) lorsqu'une tension électrique est appliquée sur le dispositif d'actionnement piézo-électrique (10).

9. Microsoupape suivant la revendication 6, dans laquelle le corps de base (34) présente une seconde ouverture de passage (32) disposée dans une zone du corps de base (34) déterminée par le rebord (20) de la puce structurée par procédé micromécanique (16).

10. Microsoupape suivant l'une des revendications 1 à 7, dans laquelle le poussoir (42; 62) obture l'ouverture de passage (50) lorsqu'il n'est pas appliqué de tension électrique sur le dispositif d'actionnement piézo-électrique (40), et laisse l'ouverture de passage (50) ouverte lorsqu'une tension électrique est appliquée sur le dispositif d'actionnement piézo-électrique (40).

11. Microsoupape suivant l'une des revendications 1 à 7, dans laquelle le dispositif d'actionnement piézo-électrique (40) est placé sur un élément du boîtier (48), par un dispositif de fixation, du côté éloigné du poussoir (62) et du dispositif de suspension, le dispositif d'actionnement (40) présentant, par ailleurs, au moins un trou de passage (56) en communication de fluide, par l'intermédiaire du dispositif de fixation, avec un trou de passage (50) dans l'élément de boîtier, le poussoir obturant, dans une première position extrême, le trou de passage (56) dans le dispositif d'actionnement piézo-électrique (40) et obturant, dans une seconde position extrême, le trou de passage (70) dans le corps de base (68), le poussoir (62) pouvant être déplacé, par l'application ou l'élimination d'une tension sur le dispositif d'actionnement piézo-électrique (40), à la première et la seconde position d'extrémité.

12. Microsoupape, aux caractéristiques suivantes :
un corps de base (48) avec une ouverture de passage (50);
un poussoir (42) ;
un dispositif de suspension (44) par lequel le poussoir (42) peut être guidé par rapport au corps de base (48) de telle sorte que l'ouverture de passage (50) puisse être obturée ou dégagée par le poussoir (42) ; et
un dispositif d'actionnement piézo-électrique (40) destiné à actionner le poussoir (42), dont l'extension dans le sens longitudinal peut être modifiée par l'application d'une tension électrique,
le poussoir (42) obturant l'ouverture de passage (50) lorsqu'il n'est pas appliqué de tension électrique sur le dispositif d'actionnement piézo-électrique (40), et laissant l'ouverture de passage (50) ouverte lorsqu'une tension électrique est appliquée sur le dispositif d'actionnement piézo-électrique (40),
le dispositif d'actionnement piézo-électrique (40) étant placé, à l'aide d'un dispositif de fixation, sur le côté du corps de base (48) éloigné du poussoir (42) et du dispositif de suspension (44), le dispositif d'actionnement piézo-électrique (40) présentant au moins un trou de passage (56) en communication de fluide, par l'intermédiaire du dispositif de fixation, avec le trou de passage (50) dans le corps de base (48), et le poussoir (42) obturant le trou de passage (50) du corps de base (48) en obturant le trou de passage (58) du dispositif d'actionnement (40),
des extrémités du dispositif d'actionnement piézo-électrique (40), distantes l'une de l'autre dans le sens longitudinal, étant reliées à des extrémités du dispositif de suspension (44), distantes l'une de l'autre dans le sens longitudinal, de sorte que le dispositif de suspension (44) constitue un moyen de fourniture d'une transmission mécanique entre le dispositif d'actionnement (40) et le poussoir (42),
une modification de l'extension du dispositif d'actionnement piézo-électrique (40) dans le sens longitudinal provoquée par l'application d'une tension électrique sur le dispositif d'actionnement piézo-électrique (40) étant convertie mécaniquement par le dispositif de suspension (12 ; 44) en un déplacement du poussoir (42) sensiblement perpendiculaire au sens longitudinal, afin de dégager ou d'obturer ainsi l'ouverture de passage (50).

13. Microsoupape suivant la revendication 12, dans laquelle le dispositif de suspension (44) et le poussoir (42) sont formés d'une seule pièce à partir d'une puce structurée par procédé micromécanique (38).

14. Microsoupape suivant la revendication 12 ou 13, dans laquelle la puce structurée par procédé micromécanique est une puce à semi-conducteur.

15. Microsoupape suivant la revendication 12 ou 13, dans laquelle la puce structurée par procédé micromécanique est réalisée en matière plastique.

16. Microsoupape suivant l'une des revendications 13 à 15, dans laquelle la puce structurée par procédé micromécanique (16 ; 38; 60) est assemblée sur son pourtour, sur au moins deux segments distants l'un de l'autre, avec le dispositif d'actionnement piézo-électrique (10 ; 40), présente une ou une pluralité de zones amincies (12 ; 44) représentant le dispositif de suspension, et présentant une zone épaissie (14; 42; 62) disposée entre les deux extrémités de la puce (16; 38 ; 60) assemblées avec le dispositif d'actionnement piézo-électrique (10 ; 40) et constituant le poussoir.
